# NEW EUROPEAN PATENT SPECIFICATION

(11) **EP 2 869 937 B2**
(45) Date of publication and mention of the opposition decision: **05.04.2023**
(45) Mention of the grant of the patent: 01.01.2020
(21) Application number: 13750358.7
(22) Date of filing: 09.07.2013
(51) Int. Cl.: A62C 2/08, A62C 31/24, B05B 15/62, B05B 15/68, E21B 41/00

(54) **Method of providing deluge system and burner boom comprising a deluge system**
Verfahren zur Bereitstellung eines Sprühflutsystems und Brennerausleger mit einem Sprühflutsystem
Procédé pour fournir un système de rideau d'eau et flêche de torchage avec un système de rideau d'eau

(30) Priority: 09.07.2012 GB 201212200; 29.08.2012 GB 201215324
(43) Date of publication of application: 13.05.2015
(73) Proprietor: Rigdeluge Global Limited, Aberdeen AB21 0JD (GB)
(72) Inventor: GARDEN, Ian, Alford Aberdeenshire AB33 8QJ (GB)
(74) Representative: Watson, Craig Simon
(86) International application number: PCT/GB2013/051810
(87) International publication number: WO 2014/009712

(56) References cited:
- CN-U- 201 593 420
- GB-A- 1 472 871
- GB-A- 2 458 740
- JP-U- S62 115 500
- US-B1- 6 340 060
- Report dated 3rd February 2012; UK12-012-RS-0001Rev P1
- Report dated 24th March 2011; "OP003Rev3-BoomSystem Installation Procedures"
- Ray Sage Article; Ray Houghton Linkedin Profile; Shaun Ryan Endorsement
- Bob Gooch-Linkedin-Profile
- Petroflame -Brochure-(Publication from Issuu website-of 8th-March 2012)
- Issuu website; Sworn statement Barry Craig
- Exhibit BC1 - Dolphin Publication Jan-Feb 2012
- Exhibit BC2 - Details of West Led Naming Ceremony

## Description

This invention relates to a deluge system utilised to create a water barrier especially between a well test flare and personnel and/or structures such as oil rigs.

When testing a well it is a common operation to flare the oil and gas from the well. This normally involves piping the oil and gas through pipework provided on a burner boom extending away from the installation. The oil and gas is flared whilst the well is being tested and data is being recovered.

The heat created by the flaring can cause discomfort to workers on the installation, and in some cases can cause severe burns and injury. Other heat sources may also cause discomfort or danger. For example well blow-outs, or bushfires. Accordingly it is known to provide a deluge system comprising a screen of water which is sprayed between the flame and the installation or other area where workers are present.

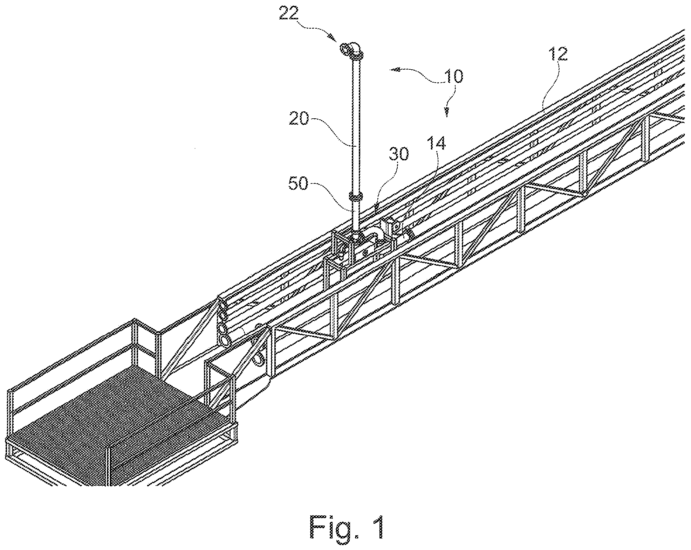

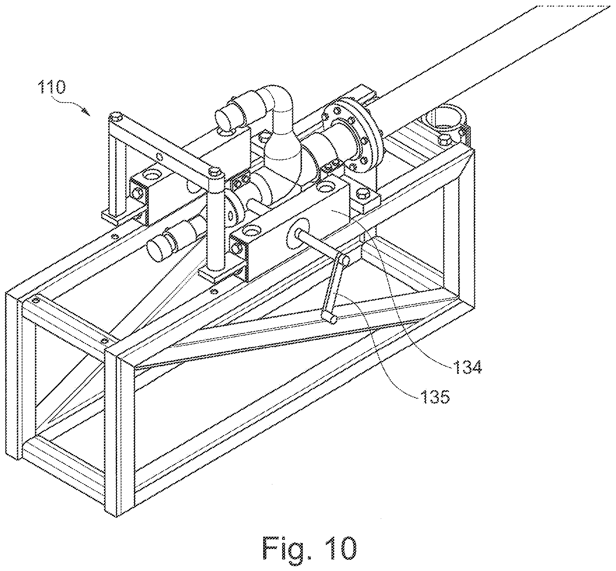

GB1472871 discloses an apparatus for the combustion of crude oil comprising a boom 20, Fig. 1, connected to an oil well platform, a burner 23 having means for atomizing the oil, and conduits 31, 32, for supplying the oil and gaseous atomizing medium to the burner. There are two burners 23, Fig. 10, and each is surrounded by a water tube 40.

CN201593420 relates to a hydraulic rotating type crude oil burner boom. The burner is arranged at the head part of the burner boom trestle. Two water curtains are disposed on the combustion arm trestle behind the burner.

The inventor of the present invention has noted a number of limitations of existing deluge systems. The boom walkway is blocked which prevents a safe escape should a fault occur or if an accident happens at the burner end of the boom the emergency crew has no direct access to and from the end point. Moreover, the nozzles in the spraying system become blocked due to corrosion in the pipework causing scale to break off and block them. Furthermore, the inventor of the present invention considers that the assembly of the necessary equipment could be achieved in a more straightforward manner and/or in a reduced time.

According to the invention, there is provided a method of providing a deluge system as claimed in claim 1 and a burner boom for flaring as claimed in claim 6.

Also disclosed herein is a deluge system comprising a base unit, a stanchion moveably attached to the base unit, a nozzle apparatus attached to the stanchion and a mechanism for moving the stanchion from a stowed position to an operative position.

The mechanism for moving the stanchion may be a winch mechanism.

Alternatively a gear mechanism may be provided and a worker can use this to move the stanchion, for example by way of a suitable handle.

Certain other parts of the deluge system may move with the stanchion e.g. nozzle apparatus whilst others remains stationary, with the moving mechanism e.g. the base unit.

Also disclosed herein is a deluge system comprising a base unit, a stanchion moveably attached to the base unit such that it can move from a stowed position to an operative position, and a nozzle apparatus attached to the stanchion,
wherein the base unit's width perpendicular to the plane defined by the movement of the stanchion, is less than 1 m.

Since the base unit is off such a size, it can be attached to a boom without impeding the escape of a person on its walkway. Its width may be smaller than 75cm or smaller than 60cm.

By leaving such a passage/space, a person can escape from the walkway in the event of an emergency. The space may be larger than 50cm or larger than 65cm or indeed completely clear for example if fixed on the outside.

Having a space on the width of the walkway means that a person can walk past the deluge system after it has been installed without having to crawl under or climb over any of its parts.

The deluge system may be placed over pipework on the boom.

For certain embodiments, the deluge system is attached to the boom outboard of handrail supports of the boom.

Also disclosed herein is a method of
providing a deluge system comprising a base unit, a stanchion, and a nozzle apparatus;
attaching the deluge system to a burner boom with a walkway, outboard of the handrail supports of the boom.

Thus since the deluge system is attached in this position, the boom walkway is not impeded by the deluge system. For example it may be provided outboard of one of the handrail supports on the boom walkway.

The deluge system normally comprises clamps and is normally clamped to the boom when in the stowed and operative position.

The deluge system is attached to a hand rail support of the boom.

Preferably the deluge system used less than half the boom walkway width.

The deluge system may comprise a filter between the inlet and the outlet to the stanchion and a first flow path may be defined for particles too large for said filter and a second flow path is defined for particles small enough for said filter; and wherein a container is provided downstream of the first flow path.

The filter may be a screen comprising at least one aperture therein such that the first flow path is for particles too large for said aperture and the second flow path is for particles small enough for said aperture.

Normally the deluge system comprises a removable portion to allow access to the container. This may be provided by the container itself, or part thereof, being removable.

The container is normally at least 20cm³ optionally more than 50 cm³ optionally more than 100 cm³.

Preferably the first flow path terminates in the container. Thus aside from its direct fluid connection with the first flow path, preferably the container has no further direct (i.e. not through the first flow path) fluid communication with any other flow path of the deluge system.

The removable portion is most normally a portion which can readily be reattached to the deluge system. Thus the removable portion may be removable by way of any one or more of a threaded connection, a snap fit connection, springs, clips, bolt & screw or others such mechanisms.

The removable portion may be the container, which may be threadably connected with another portion of the deluge system, such as the screen.

The aperture is preferably linear in shape - one dimension is larger than a second dimension, with the third dimension being defined as the depth of the aperture. For example the first dimension may be more than 3, or more than 8, times the length of the second dimension.

The screen is normally a tubular screen with a passage therein, and said at least one aperture thereon is on a face (rather than an end) of the tubular screen. Thus the second flow path may be from/to the passage of the tube to/from the outside of the screen; preferably from the passage of the tube, to the outside of the screen.

The portion of the deluge system between the inlet and the screen will be referred to as the "inlet flow path" and the portion of the deluge system between the screen and the outlet will be referred to as the "outlet flow path".

The inlet flow path may be a relatively central portion of the deluge system compared to the outlet flow path although this depends on the actual water pattern required.

The inlet flow path and the first flow path are preferably co-linear. This allows certain embodiments to create a flow pressure to encourage the debris to accumulate in the end of the first flow path, which terminates in the container.

There may be a further container co-linear with the stanchion.

Depending on the amount of fluid required, the deluge system may also use the installations own pumps without requiring a dedicated pumping unit.

Also disclosed herein is a deluge system comprising:
a moveable member comprising a stanchion, the stanchion having an internal fluid channel and being suitable to attach a nozzle apparatus thereto;
a connection mechanism,
wherein the moveable member is rotationally attached to the connection mechanism at a connection point spaced away from the end of the moveable member.

Embodiments of the invention include a deluge system as described herein to provide a fluid screen to mitigate heat transfer. This is especially applicable during well testing, often on offshore platforms.

Since the moveable member is connected to the connection mechanism at a point spaced away from the end of the moveable member, one end of the moveable member acts as a counterweight to the other end of the moveable member. Thus in use when installing the moveable member and so moving it typically from a horizontal position to a generally vertical position, the amount of force required to move towards an erect vertical position is less.

Being "spaced away from the end of the moveable member" means being spaced away by at least 5% of the moveable member's length (without nozzle apparatus) from its end. Certain embodiments are spaced away further, such as by at least 10% or at least 20% or at least 30% optionally more than 40%. The point may be spaced away by 50% (i.e. be in the middle of the moveable member's length).

The connection point is however often less than 50% of the moveable member's length, optionally less than 40%. In particularly preferred embodiments the connection point around which the moveable member rotates, or part-rotates may be spaced away from the end of the moveable member by 25 - 35% of the moveable member's length.

Normally the end from which the connection point is spaced away, for example by 25 - 35% of its length, is the end opposite the end suitable to receive the nozzle apparatus.

Thus, before use, a nozzle apparatus is typically attached to the stanchion and this may be fitted shortly before erection of the moveable member. This is typically fitted towards one end of the stanchion, indeed normally at the end of the stanchion and normally at the end further away from the connection point. The nozzle apparatus is normally in fluid communication with the fluid channel of the stanchion and fluid directed through the stanchion proceed through the nozzle apparatus and creates a water screen which mitigates heat transfer.

Thus the moveable member in use has a nozzle end between the connection point and towards the nozzle; and an opposite counterweight end, between the connection point and towards the opposite end.

Additional weight may be added to the counterweight end. Clearly there is a pay-off between the amount of weight required and the position of the connection point. Moreover, the length of the moveable member also affects the amount of weight required. Nevertheless, embodiments of the invention often have between 50-300 kg, optionally 100 - 200kg of weight between the connection point and the counterweight end of the moveable member.

Normally less than 50% of the weight of the moveable member (including the nozzle apparatus) is at the counterweight end and more than 50% of the weight of the moveable member (including the nozzle apparatus) at the nozzle end. In this way, the system is biased to remain in a stowed, often horizontal, position.

However, preferably at least 20% of the weight, optionally more than 30%, perhaps more than 40% of the weight of the moveable member and attached nozzle apparatus are at the counterweight end; generally with a preferred maximum of 49% of the weight at this counterweight end.

Thus, for certain embodiments, the force required to overcome the normally slight bias towards the nozzle end, is much less than conventional systems, where the entire weight of the moveable member must be lifted. When used on an offshore installation, use of the platform's own winch may not therefore be required.

For such embodiments, benefits ensue. Traditionally, the platform's crane needs to raise the system and typically position a 4" flange to another 4" flange while lifting the assembly over the boom and above workers who must guide the assembly down and connect it. This is a very dangerous activity which embodiments of the present invention can avoid or mitigate.

Moreover, given the crane on the platform can only pull towards the platform, earlier deluge systems need to be orientated so that their moveable member moves upwards towards the platform. For larger stanchions the resulting operational position is often spaced away from the well flaring by a greater distance than desired. In contrast, the embodiments of the present invention which do not require the platforms own crane or winch, can move upwards away from the platform and so their final operational position allows the water screen operation to be optimally positioned from the well flaring.

In any case, embodiments obviate the need to employ the crane's winch (or indeed any winch) and so make installation quicker and easier.

The moveable member may be arranged to rotate by at least 45 normally at least 89 degrees. Indeed preferred embodiments can rotate by more than 90 degrees, to over 170 degrees. Thus they may move from one stowed position, normally generally in line with the boom, to a position at 90 degrees to this, and then continue to a position at 180 degrees to the original stowed position. In this way such embodiments may be stowed on either side of the connection bracket, as required by the particular situation. Certain embodiments can rotate by more than 180 degrees, for example 270 degrees or full 360 degree rotation may be allowed. In this way, the moveable member can be rotated in either rotational direction in order to more from the stowed position to the operative position, and this may be useful for example when rotation in one direction is impeded.

Further, the moveable member may be rotationally mounted in a separate, normally horizontal, plane; normally at right angles to the plane defined by the movement of the moveable member between the stowed position and the operative position. Thus for example the movable member may be in a "transit" position where the nozzle end may be closer to the host facility, and then moved, 180 degrees, for example in a horizontal plane, to the stowed position so that the nozzle end is the distal end relative to the host facility. Thereafter, the moveable member may be moved in a separate plane, from this stowed position to the operative position.

The connection mechanism may be suitable for connection to a boom and in use may be connected to a boom, ideally outboard of handrail supports of the boom or at least preferably not blocking a walkway. An added benefit of such embodiments is that since the deluge system is attached in this position, access to the boom walkway is not impeded by the deluge system of such preferred embodiments.

The connection mechanism is attached to a hand rail support of the boom, optionally via a frame. It may be provided internal or external of the walkway, preferably not blocking the boom escape route.

Embodiments of the invention include a method of using a deluge system as described herein, the method including: creating a screen of water to mitigate heat transfer from a heat source.

The deluge system according to the present disclosure is normally for use to create a water or fluid screen to mitigate heat transfer from a well-testing operation, often but not always on an offshore platform. It may also be used for a land flaring operation. Moreover, in an alternative use, the deluge system may also be positioned on a portable unit for bushfires and forest fires where a truck can position the unit, for example, in front of a building beside a water source. In this way heat transfer may be mitigated which can for example protect people or livestock from potentially deadly heat affects, or protect property from catching fire.

As a further alternative, the deluge system can also be used for blow-out protection. For example where a blow-out has occurred from a hydrocarbon well, and expelled liquids or gases are on fire, the system may be provided to mitigate heat loss by providing a screen of fluid, often water, to mitigate heat transfer from the flaming blow-out.

Thus the present disclosure provides various methods for mitigating heat transfer from a burner boom with a walkway.

Embodiments of the present invention will now be described, by way of example only, with reference to the accompanying figures, in which:
Fig. 1 is a perspective view of a deluge system in an operative position on a flare boom in accordance with the present invention;
Fig. 2a is an end view of the Fig. 1 deluge system in an outboard operative position and a flare boom;
Fig. 2b is a top view of the Fig. 2a deluge system in an outboard stowed position and a flare boom;
Fig. 3 is a perspective view of the Fig. 2b deluge system in an outboard stowed position and a flare boom;
Fig. 4a is a top view of the Fig. 1 deluge system in an inboard stowed position and a flare boom;
Fig. 4b is an end view of the Fig. 4a deluge system in an inboard operative position and a flare boom;
Fig. 5a is a top view of the Fig. 1 deluge system in a further inboard stowed position and a flare boom;
Fig. 5b is an end view of the Fig. 5a deluge system in the further inboard and operative position and a flare boom;
Fig. 6 is a side view of a lower end of the Fig. 1 deluge system in an operative position and a flare boom;
Fig. 7 is a perspective view of the Fig. 1 deluge system;
Figs. 8a, 8b are side views of the Fig. 1 deluge system in a stowed position and a flare boom;
Figs. 8c - 8d are a series of side views of the Fig. 1 deluge system moving into the operative position and a flare boom;
Fig. 9 is a further perspective view of a deluge system in accordance with the present invention; and,
Fig. 10 is a further perspective view of a different embodiment of a deluge system in accordance with the present invention.
Fig. 11 is a perspective view of a deluge system in a stowed position on a flare boom in accordance with the present invention;
Fig. 12 is a perspective view of the Fig. 11 deluge system in an operative position;
Fig. 13 is an enlarged view of the Fig. 11 deluge system showing the connection mechanism and a connection point;
Fig. 14a is a perspective view of a boom and deluge system in accordance with the present invention;
Fig. 14b is a plan view of the Fig. 14a boom and deluge system;
Fig. 14c is an end view of the Fig. 14a boom and deluge system;
Fig. 14d is a side view of the Fig. 14a boom and deluge system;
Fig. 15 is a perspective view of a boom and another embodiment of the deluge system in accordance with the present invention; in a transit position;
Fig. 16 is a perspective view of the Fig. 15 deluge system in a stowed position, including nozzle apparatus;
Fig. 17 is a perspective view of the Fig. 16 deluge system and nozzle apparatus in further a stowed position;
Fig. 18 is a perspective view of the Fig. 16 deluge system and nozzle apparatus in an operative position;
Fig. 19 is a perspective view of the Fig. 16 deluge system and nozzle apparatus in further a servicing position.

Fig. 1 shows one embodiment of a deluge system 10 provided on a boom 12 of an offshore installation (not shown). The deluge system 10 comprises a base unit 30 having a main body 50 connected to a stanchion tube 20 and at the opposite end of the stanchion 20, a nozzle apparatus 22. The deluge system 10 takes water supplied by pumps (not shown) through pipework 14, through the stanchion 20 into the nozzle apparatus 22 to create a screen of water, thus mitigating the heat transfer from a well flaring operation at the end of the boom 12.

The position of the deluge system 10 may be secured to the boom 12 in various positions; but all positions for preferred embodiments leave the boom 12 and its walkway 16 free to walk on for personnel, who may need to run off the boom 12 in the event of an emergency.

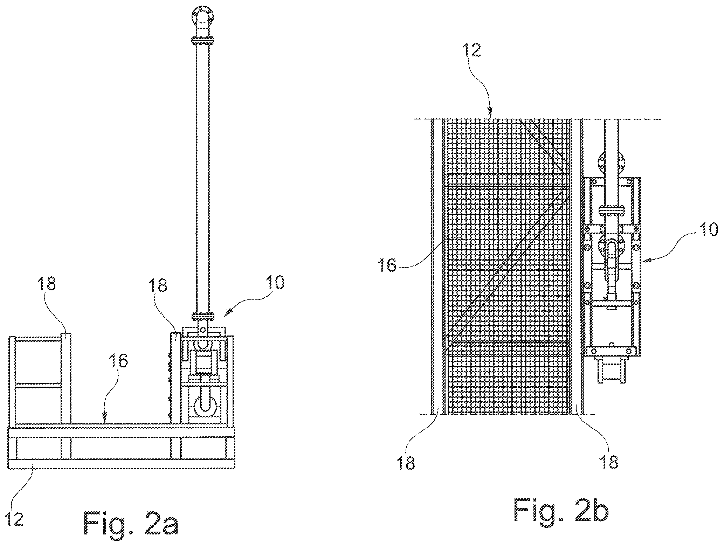

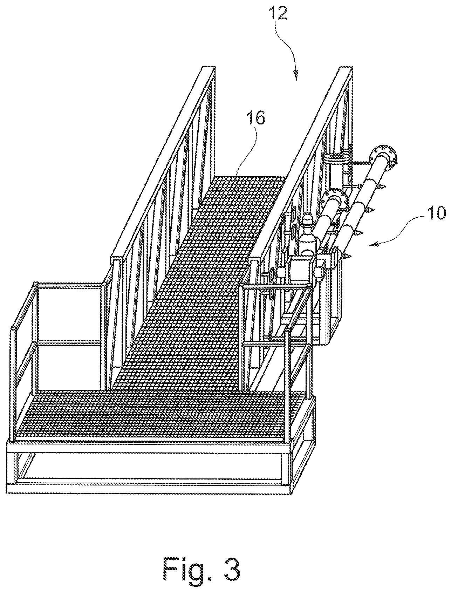

A first positional option is shown in Figs. 2a and 2b where the deluge system 10 is provided outboard of boom handrails 18. The walkway 16 is thus completely clear for access for personnel. Fig. 3 shows the deluge system 10 in this outboard and stowed position. This contrasts sharply with existing systems which are provided over both handrails and so block the use of the walkway.

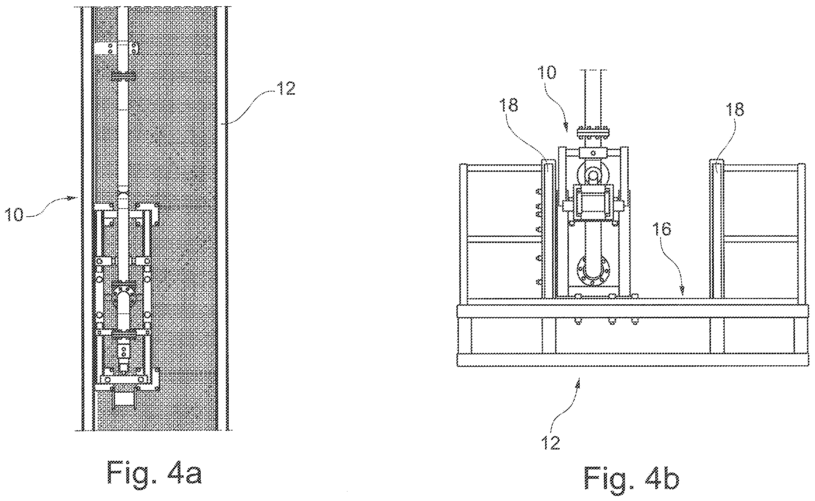

A second positional option is shown in Figs. 4a and 4b where the the deluge system 10 is provided inboard of the handrails 18 and clamped to the side thereof. Whilst some space on the boom walkway 16 is taken up by the deluge system 10 there is still sufficient space on the walkway 16 to allow personnel to access the entire boom and escape therefrom in an emergency.

Such a position can be beneficial for installations that have their own booms installed as they tend to be wider than temporarily installed flare booms.

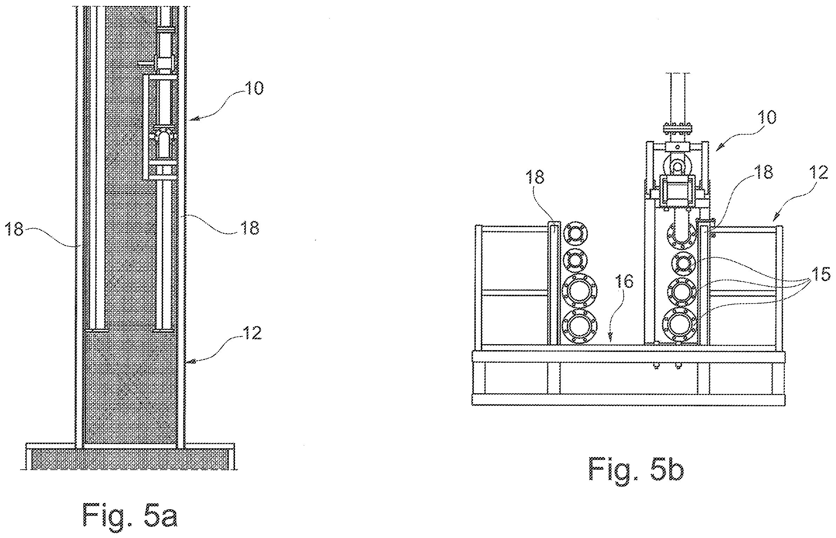

A further positional option for the deluge system 10 is shown in Figs. 5a and 5b. This position is inboard of the boom handrails 18 but over pipework 15 often present in booms 12, thus making minimal difference to the accessible area of the walkway 16; and so still allowing access for personnel.

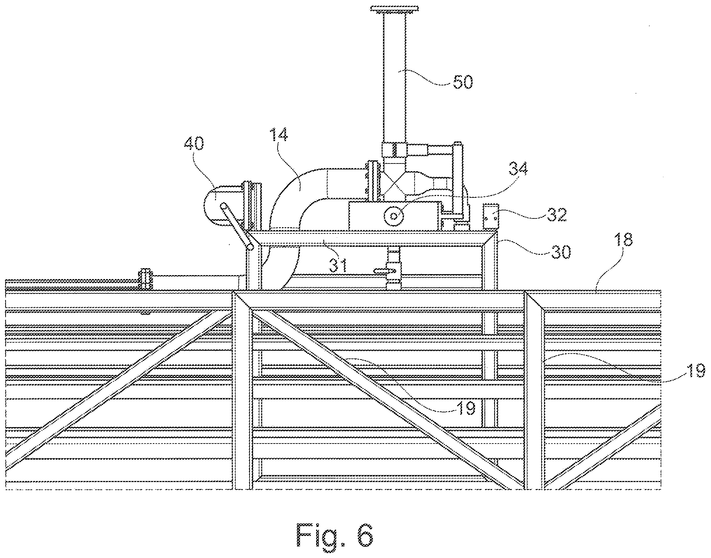

As shown in Fig. 6, the deluge system 10 comprises a base unit 30, a winch 40 and a main body 50. The base unit 30 comprises a frame 31 which is clamped to the handrails 18 and their supports 19.

The winch 40 is attached to the base unit 30 and controls a line 42 (not shown in Fig. 6) which extends to the opposite end of the stanchion 20 in order to move the main body 50, stanchion 20 and nozzle apparatus 22 as described in more detail below.

This contrasts with existing systems where the installation's crane needs to raise the system and typically position a 4" flange to another 4" flange while lifting the assembly over the boom and above workers who must guide the assembly down and connect it. This is a very dangerous activity which embodiments of the present invention including the winch avoid or mitigate.

Moreover, given the crane on the installation can only pull towards the installation, any previous deluge system needs to be orientated so that it moves upwards towards the installation. For larger stanchions the resulting operational position is often spaced away from the well flaring by a greater distance than desired. In contrast, the embodiments of the present invention comprising a winch 40 or gearing system described below may be orientated, if required, such that they move upwards away from the installation and so their final operational position allows the water screen operation to be optimally positioned form the well flaring.

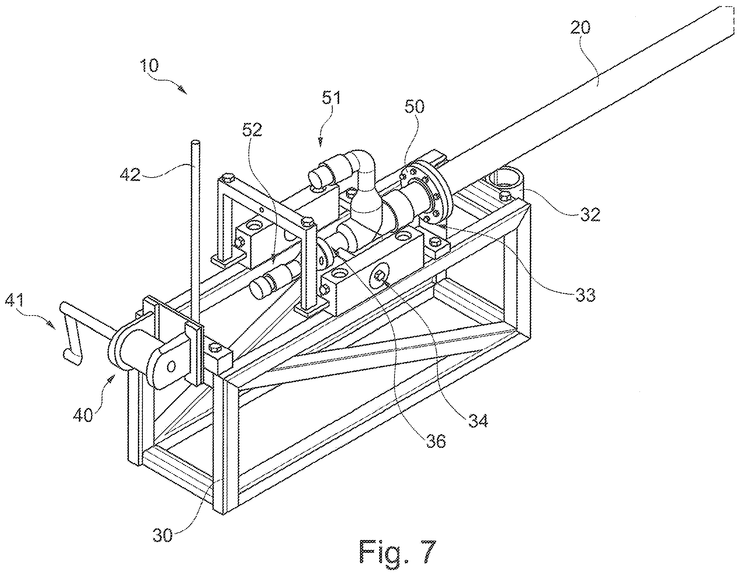

To allow for the main body 50 to move, a swivel unit 34 has a moving mechanism comprising (not shown) nylon brushes and washers (alternatively on roller bearings) and optionally a gearing system. Better shown in Fig. 7, the swivel unit 34 is connected to swivel clamps 36 which are attached to the main body 50.

The main body 50 includes containers or "debris traps" 51, 52. Within the main body is a screen which inhibits debris in the water supply from going up the stanchion 20 towards the nozzle. The debris traps 51, 52 provide a recess for the debris to collect (rather than on the screen).

Some further details are shown in Fig. 7 including a removable winch handle 41, a further pipe support 33.

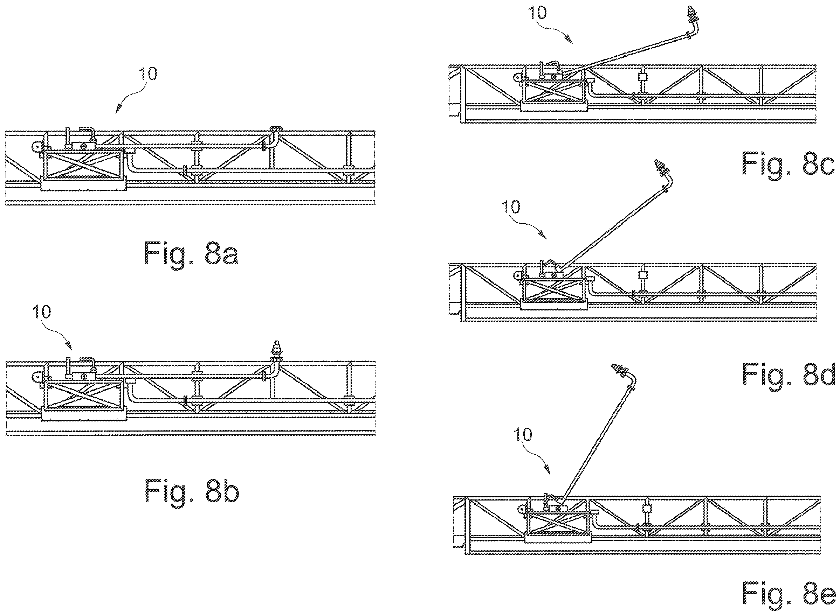

The series of views from Fig. 8a to 8e show the deluge system 10 moving from the stowed position (Fig. 8a), the stowed position with the nozzle apparatus 12 attached (Fig. 8b) and approaching the operational position (Fig. 8e). Typically the deluge system 10 is installed onshore in the position shown in Fig. 8a ready for shipping. The nozzle apparatus 22 is installed on location (Fig. 8b) and then
the stanchion 20, nozzle apparatus 22 and main body 50 erected into the operational position by the internal winch or gearing with a handle. When the system is the operational position, it is secured and the 4" flexible pipework 14 is attached to the main body 50. The winch also allows convenient stowing of the system when not in use, without requiring specialist personnel and use of the installation's crane. This also removes the dangerous operation of swinging the boom towards the rig in order to allow access for the installation's crane.

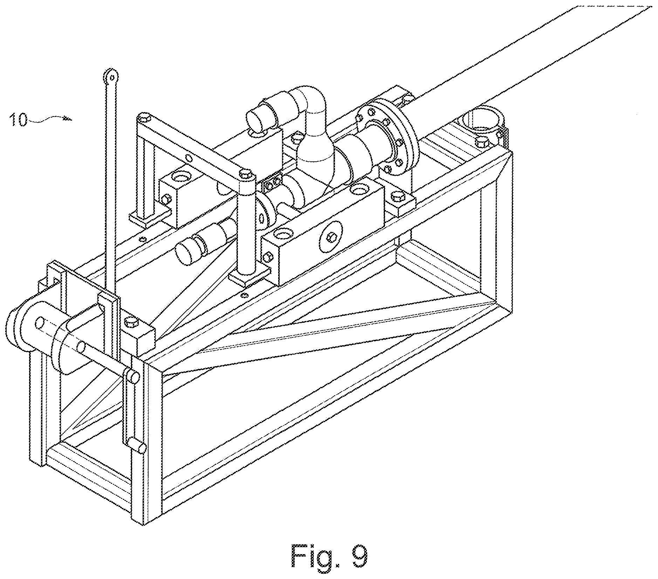

Fig. 9 shows a further view of a deluge system in accordance with the present invention. Fig. 10 shows a modified embodiment 110 where a handle 135 is attached to the swivel unit 134. The swivel unit 134 includes a gearing system (not shown) and so an operator can use the handle to erect the stanchion 20 and associated nozzle apparatus.

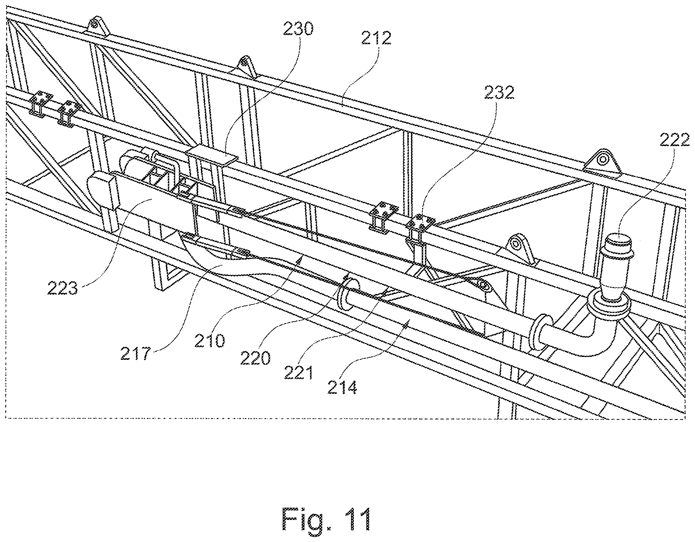

Fig. 11 shows one embodiment of an alternate deluge system 210 provided in a stowed position on a boom 212 of an offshore platform (not shown). The deluge system 210 comprises a mechanism connection or bracket 230 connected to a moveable member 221. The moveable member 221 comprises a stanchion tube 220, nozzle apparatus 222 and a counterweight 223. A further clamp 232 holds the moveable member in the stowed position and can be released before the stanchion is raised.

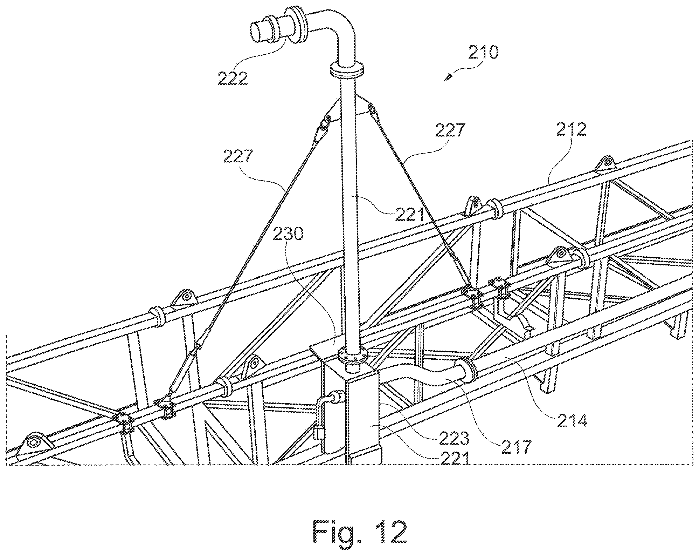

As will be described in more detail below, the moveable member 221 moves around a connection point (i.e. a point with the connection bracket 230 where it can rotate or part-rotate around) so that it moves to an operative position, shown in Fig. 12, and is then secured by ropes 227. The deluge system 210 then takes water supplied by pumps (not shown) through pipework 214, hose 217, through the stanchion 220 into the nozzle apparatus 222 to create a screen of water, thus mitigating the heat transfer from a well flaring operation at the end of the boom 212.

This moving operation is much easier because of the position of the connection point (it is not at the end of the moveable member) and the counterweight 223, at the end of the moveable member opposite the nozzle apparatus 222.

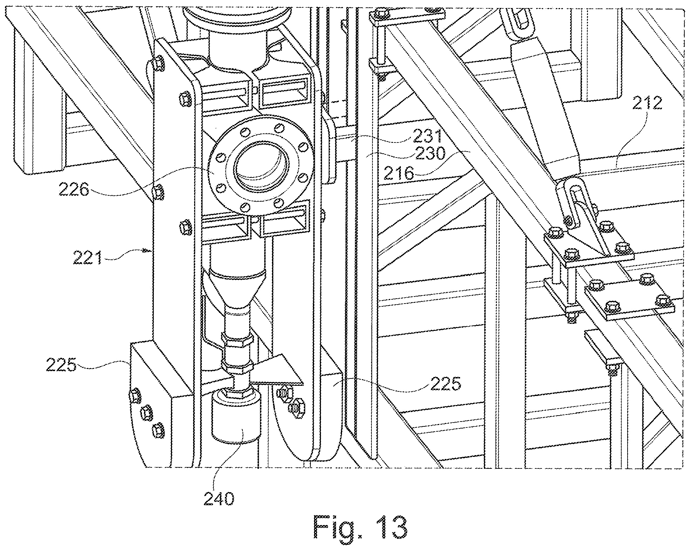

An enlarged view of the connection bracket 230 and a counterweight end of the moveable member 221 in an upright position is shown in Fig. 13. The bracket 230 is secured to sides/handrail supports 216 of the boom 212. The moveable member is attached to the bracket at a connection point 231. Thus the moveable member and connection bracket are both outboard of the handrails 216 of the boom 212. This contrasts sharply with existing systems which are provided over both handrails and so block the use of the walkway. Notably a deluge system provided in accordance with this embodiment of the invention, leaves the walkway completely clear for access for personnel, especially in an emergency situation when the walkway needs to be cleared of personnel quickly to escape a dangerous situation.

Weights 225 are attached to the counterweight end for aiding the erection of the stanchion 220. A fluid connector 226 is provided which is connected to a water supply and leads to a fluid passage within the stanchion 220. A debris trap 240 is also provided to collect debris in the water supply. To become operative therefore, the platform's water supply 214 (shown in Fig. 12) is connected to the fluid connector 226 via a hose 217. Note, for certain embodiments, additional weights 225 need not be added and the deluge system can still function and benefit from the counterweight effect of the end of the moveable member (since the connection point is spaced away from the end of the moveable member.)

When moving the moveable member 221 from the stowed position (Fig. 11) to the operative position (Fig. 12) the position of the rotating point 231 and the counterweight allows a very modest force to be applied to move the moveable member, and so position the stanchion 220 in the operative position. Thus for certain embodiments, an platform's cranes or a stand-alone winching system may not be required to move the stanchion 220 and nozzle apparatus 222 to the operative position. Due to the limitations of the platform's winches (e.g. it can only pull towards the platform) the deluge system 210 can be more optimally positioned on the boom 212 than was possible in certain situations for known systems.

A great benefit of embodiments of the invention is that the operation and raising of the stanchion if a deluge apparatus is greatly simplified. Moreover a further benefit is that the operation is safer.

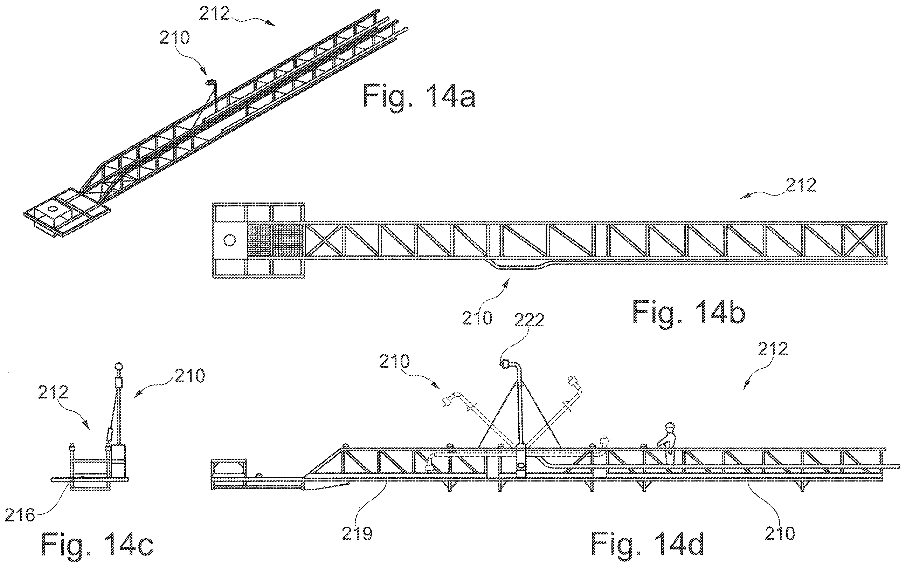

Figs. 14a - 14b are a series of views of the boom 212 with the deluge system attached thereto. As can be seen in particular from the plan (Fig. 14b) and end (Fig. 14c) views, a walkway 219, shown in Figs. 14c and 14d, are clear for workers and the deluge system 210 does not block access to this walkway. Moreover, as can be seen from Fig. 14d, the deluge system can move from a front to a back storage position, as required.

This can further assist in operation of the deluge system. Ideally the nozzle apparatus 222 is attached on location. This is much easier and less hazardous to do when the nozzle apparatus 222 is facing in the upwards direction. Thus the moveable member 221 can be appropriately positioned in a horizontal position so that the nozzle apparatus 222 can be attached in such a position. It can also be easier to raise the moveable member 221 when the heavy nozzle apparatus 222 is in such an upwardly facing position, as the effective weight at the connection point is less, compared to when the nozzle apparatus 222 is facing downwards.

Moreover, when not in use, it is better to store the nozzle in a downwards position, where it is less likely to become damaged, and also so that it can be positioned below the boom handrail 216. Thus the moveable member can be rotated to be stowed in a position or about 180 degrees to the position where the nozzle was attached.

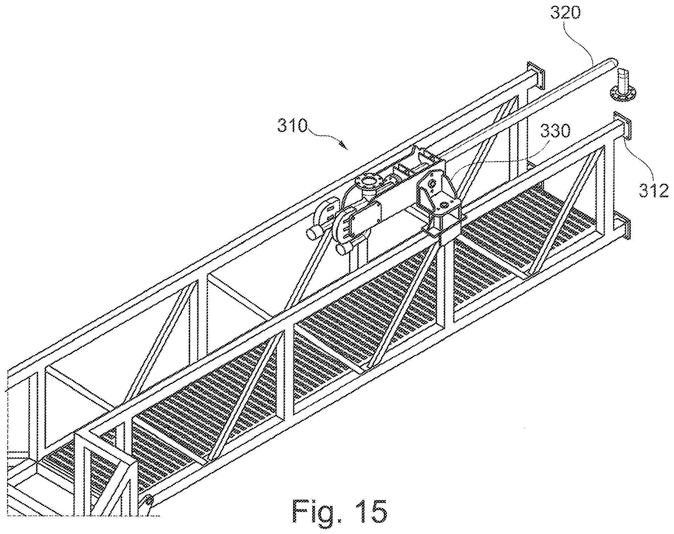

Figs. 15 to 19 show an alternative embodiment of deluge system 310 in accordance with one aspect of the invention. It includes a split base unit 330 which can rotate 360 degrees vertically in order to move from the stowed position to an operative position, and 360 degrees horizontally in order to move from a transit position to stowed positions. The stanchion 320 can be any length.

As shown in Fig. 15 the base unit is attached to one handrail support of the boom 312 and shipped in the position shown, with the stanchion 320 and other components over the walkway in order to reduce dropped-object hazards (notably this is not the position in which it should be used.) The nozzle apparatus 322 is normally attached onsite and not shipped assembled.

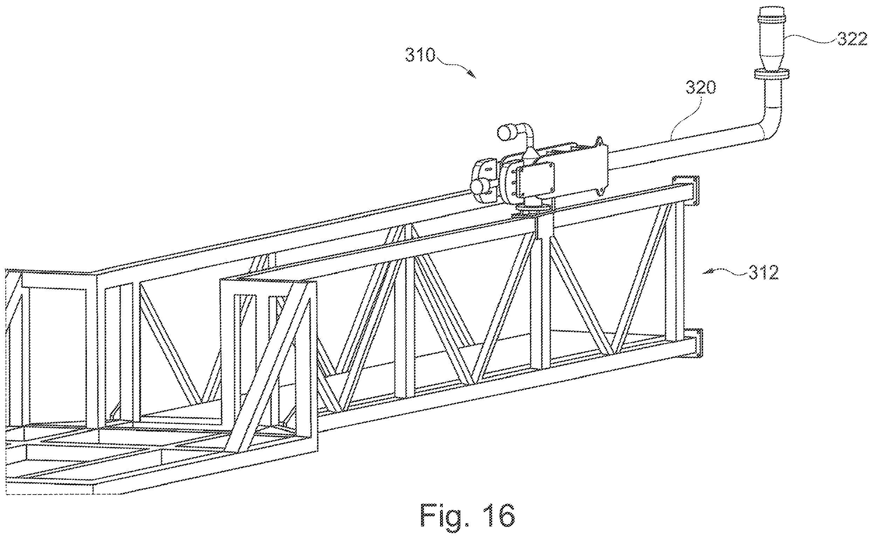

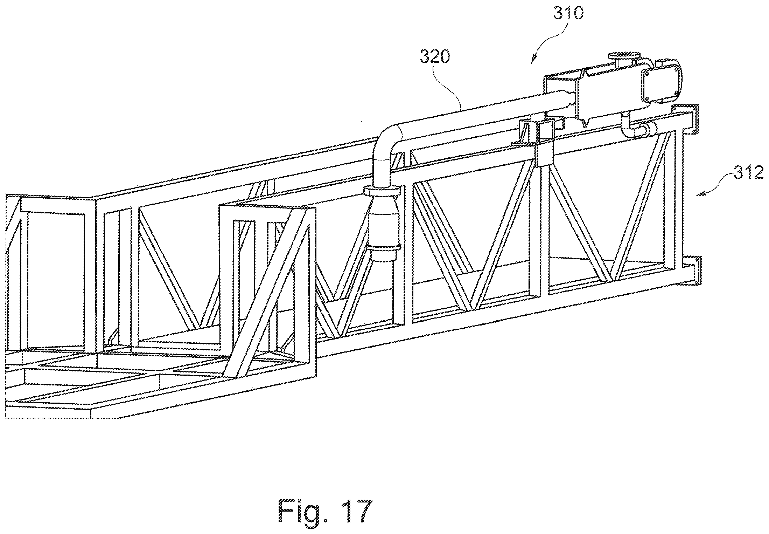

Fig. 16 shows a "stowed" position. The stanchion 320 has been swung around horizontally, compared to the Fig. 15 position, so that it extends outboard of the handrails, and the nozzle apparatus 322 attached. An alternative stowed position is shown in Fig. 17, which is also outboard of the handrails, and can be positioned in this way by 180 degree rotation of the stanchion 320 and associated components, from the position shown in Fig. 16. This may be done in either rotational direction. For example if there is anything blocking the overhead route, the stanchion 320 may be rotated 180 degrees such that the nozzle extends downwards relative to the boom 312 and around from the Fig. 16 to the Fig. 17 position.

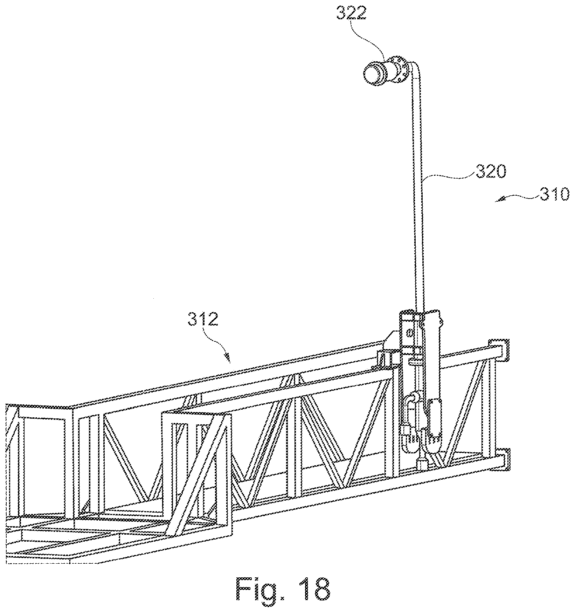

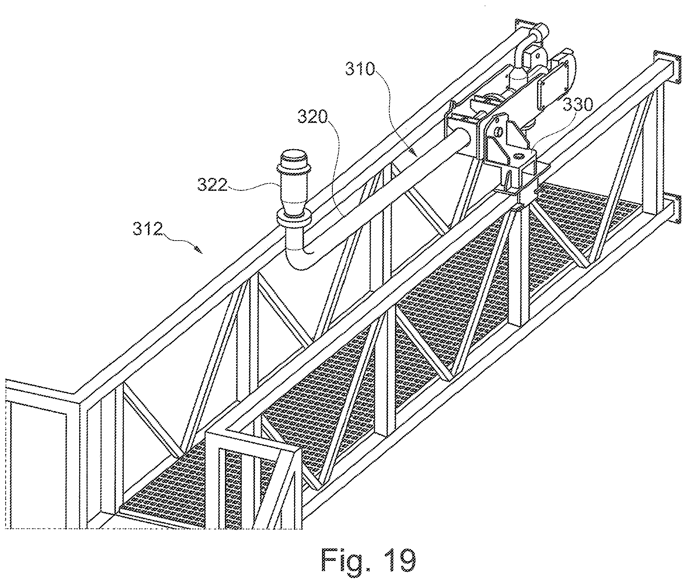

Fig. 18 shows the deluge system 310 in an operative position, leaving the walkway clear of obstacles. Fig. 19 shows a yet further position of the deluge system, where it has been rotated vertically and horizontally and can take on the shown position which is useful for servicing.

In preferred embodiments, the deluge system is positioned outwith the flare boom walkway on a single handrail or attached to the handrail supports.

An advantage of certain embodiments is that the deluge may have its own mechanism, e.g. a winch or counter weight, for moving the stanchion from the stowed position to the operational position avoiding the risk of being struck by crane operations when it is not in use.

Improvements and modifications may be made without departing from the scope of the appended claims.

## Claims

1. A method of providing a deluge system (10, 110, 210, 310) to create a water barrier on a burner boom (12, 212, 312) comprising a walkway (16, 219) whilst flaring, the burner boom being provided with oil and gas pipework (15),
the deluge system (10, 110, 210, 310) comprising a base unit (30, 230, 330), a stanchion (20, 220, 320), and a nozzle apparatus (22, 222, 322),
wherein the stanchion (20, 220, 320) is attached to the base unit and moveable relative thereto, from a stowed position to an operative position;
the method comprising attaching the deluge system (10, 110, 210, 310) to the burner boom (12, 212, 312) adjacent the walkway (16, 219) with the base unit secured to a handrail support of the burner boom, such that there remains a width of at least 30cm clear on the burner boom's walkway width after the deluge system (10, 110, 210, 310) has been attached;
using the burner boom for a well-flaring operation at the end of the boom by supplying oil and gas through the oil and gas pipework, and thereby generating a heat source at the end of the boom;
creating the water barrier with a screen of water using the deluge system, to mitigate heat transfer from the heat source.

2. A method as claimed in claim 1, wherein there remains a width of at least 50cm clear on the burner boom's walkway width after the deluge system (10, 110, 210, 310) has been attached.

3. A method as claimed in claim 2, wherein there remains a width of at least 65cm clear on the burner boom's walkway width after the deluge system (10, 110, 210, 310) has been attached.

4. A method as claimed in any one of claims 1 to 3, wherein the deluge system (10, 110, 210, 310) is placed over the oil and gas pipework (15) on the burner boom walkway (12, 212, 312).

5. A method as claimed in any one of claims 1 to 3, wherein the deluge system (10, 110, 210, 310) is attached to the burner boom (12, 212, 312) outboard of handrail supports (19) of the burner boom walkway (16, 219).

6. A burner boom for flaring, the burner boom being provided with oil and gas pipework (15) and comprising a walkway and a deluge system (10, 110, 210, 310) to create a water barrier,
wherein the deluge system (10, 110, 210, 310) comprises a base unit (30, 230, 330), a stanchion (20, 220, 320) attached to the base unit (30, 230, 330) and moveable relative thereto between a stowed position and an operative position, and a nozzle apparatus (22, 222, 322) attached to the stanchion (20, 220, 320), wherein the deluge system (10, 110, 210, 310) is connected to the burner boom (12, 212, 312) adjacent the walkway (16, 219) with the base unit secured to a handrail support of the burner boom, such that the walkway (16, 219) is provided with a clearance width of at least 30cm; such that the burner boom is configured for a well-flaring operation at an end of the boom, which generates a heat source at the end of the boom; and the deluge system is configured to create the water barrier with a screen of water to mitigate heat transfer from the heat source.

7. A burner boom as claimed in claim 6, wherein the stanchion (20, 220, 320) is configured to extend parallel to the walkway (16, 219) when the stanchion (20, 220, 320) is in the stowed position.

8. A burner boom as claimed in any one of claims 6 or 7, wherein the stanchion (220, 320) is configured to move between an orientation in which the nozzle apparatus (222, 322) faces upwards and a further position in which the nozzle apparatus (222, 322) faces downwards.

9. A burner boom as claimed in any one of claims 6 to 8, wherein a moveable member (221) comprises the stanchion (20, 220, 320), the stanchion (20, 220, 320) having an internal fluid channel and being suitable to attach the nozzle apparatus (22, 222, 322) thereto; and
the base unit (30, 230, 330) comprises a connection mechanism, wherein the moveable member (221) is rotationally attached to the connection mechanism at a connection point (231) spaced away from an end of the moveable member (221).

10. A burner boom as claimed in claim 9, wherein the moveable member (221) has a nozzle end between said connection point (231) and the end suitable for attaching a nozzle apparatus (22, 222, 322), and a counterweight end between said connection point (231) and the opposite end of the moveable member (221); and
wherein said counterweight end weighs between 50 - 300 kg, and optionally 100 - 200kg.

11. A burner boom as claimed in claim 9 or 10, wherein the moveable member (221) has a nozzle end between said connection point (231) and the end suitable for attaching a nozzle apparatus (22, 222, 322), and a counterweight end between said connection point (231) and the opposite end of the moveable member (221); and
wherein 20 - 40% of the combined weight of the moveable member (221) and nozzle apparatus (22, 222, 322) is at the counterweight end of the moveable member (221).

12. A burner boom as claimed in any one of claims 6 to 11, wherein the walkway (16, 219) of the burner boom (12, 212, 312) is provided with boom handrails (18, 216) and the deluge system (10, 110, 210, 310) is attached to the burner boom (12, 212, 312) outboard of the boom handrails (18, 216).

13. A burner boom as claimed in any one of claims 6 to 12, wherein the walkway is provided with a clearance width of at least 50cm along its length, and optionally the walkway (16, 219) is provided with a clearance width of at least 65cm along its length.

## Patentansprüche

1. Verfahren zum Bereitstellen eines Sprühflutsystems (10, 110, 210, 310), um eine Wassersperre an einem Brennerausleger (12, 212, 312), der einen Laufsteg (16, 219) umfasst, während eines Abfackelns zu erzeugen, wobei der Brennerausleger mit Öl- und Gasrohrleitungen (15) versehen ist, wobei das Sprühflutsystem (10,110,210,310) eine Basiseinheit (30,230,330), einen Ständer (20, 220, 320) und eine Düseneinrichtung (22, 222, 322) umfasst, wobei der Ständer (20, 220, 320) an der Basiseinheit angebracht ist und relativ dazu, von einer Verstauposition zu einer Betriebsposition, bewegbar ist,
wobei das Verfahren das Anbringen des Sprühflutsystems (10, 110, 210, 310) an dem Brennerausleger (12, 212, 312) neben dem Laufsteg (16, 219), wobei die Basiseinheit an einem Handlaufträger des Brennerauslegers befestigt ist, so dass eine Breite von mindestens 30cm auf der Laufstegbreite des Brennerauslegers frei bleibt, nachdem das Sprühflutsystem (10, 110, 210, 310) angebracht worden ist,
das Verwenden des Brennerauslegers für einen Bohrloch-Abfackelbetrieb an dem Ende des Auslegers, indem Öl und Gas durch die Öl- und Gasrohrleitungen zugeführt werden, und dadurch eine Wärmequelle an dem Ende des Auslegers erzeugt wird;
das Erzeugen einer Wassersperre mit einem Wasserschleier unter Verwendung des Sprühflutsystems, um die Wärmeübertragung von der Wärmequelle abzuschwächen, umfasst.

2. Verfahren nach Anspruch 1, wobei eine Breite von mindestens 50cm auf der Laufstegbreite des Brennerauslegers frei bleibt, nachdem das Sprühflutsystem (10,110,210,310) angebracht worden ist.

3. Verfahren nach Anspruch 2, wobei eine Breite von mindestens 65cm auf der Laufstegbreite des Brennerauslegers frei bleibt, nachdem das Sprühflutsystem (10,110,210,310) angebracht worden ist.

4. Verfahren nach einem der Ansprüche 1 bis 3, wobei das Sprühflutsystem (10, 110, 210, 310) über den Öl - und Gasrohrleitungen (15) an dem Brennerausleger-Laufsteg platziert ist (12,212,312).

5. Verfahren nach einem der Ansprüche 1 bis 3, wobei das Sprühflutsystem (10, 110, 210, 310) an dem Brennerausleger (12, 212, 312) außen von den Handlaufträgern (19) des Brennerausleger-Laufstegs (16,219) angebracht ist.

6. Brennerausleger zum Abfackeln, wobei der Brennerausleger mit Öl- und Gasrohrleitungen (15) versehen ist und einen Laufsteg und ein Sprühflutsystem (10, 110, 210, 310), um eine Wassersperre zu erzeugen, umfasst,
wobei das Sprühflutsystem (10, 110, 210, 310) eine Basiseinheit (30, 230, 330), einen Ständer (20, 220, 320), der an der Basiseinheit (30, 230, 330) angebracht ist und relativ dazu zwischen einer Verstauposition und einer Betriebsposition bewegbar ist, und eine Düseneinrichtung (22, 222, 322), die am Ständer (20, 220, 320) angebracht ist, umfasst, wobei das Sprühflutsystem (10, 110, 210, 310) mit dem Brennerausleger (12, 212, 312) neben dem Laufsteg (16, 219) verbunden ist, wobei die Basiseinheit an einem Handlaufträger des Brennerauslegers befestigt ist, so dass der Laufsteg (16,219) mit einer lichten Breite von mindestens 30cm bereitgestellt ist; so dass der Brennerausleger für einen Bohrlochabfackelbetrieb an einem Ende des Auslegers ausgestaltet ist, was eine Wärmequelle am Ende des Auslegers erzeugt; und das Sprühflutsystem dazu ausgestaltet ist, die Wassersperre mit einem Wasserschleier zu erzeugen, um die Wärmeübertragung von der Wärmequelle abzuschwächen.

7. Brennerausleger nach Anspruch 6, wobei der Ständer (20, 220, 320) dazu ausgestaltet ist, sich parallel zu dem Laufsteg (16, 219) zu erstrecken, wenn sich der Ständer (20, 220, 320) in der Verstauposition befindet.

8. Brennerausleger nach einem der Ansprüche 6 oder 7, wobei der Ständer (220,320) dazu ausgestaltet ist, sich zwischen einer Ausrichtung, in welcher die Düseneinrichtung (222, 322) nach oben gewandt ist, und einer weiteren Position, in welcher die Düseneinrichtung (222, 322) nach unten gewandt ist, zu bewegen.

9. Brennerausleger nach einem der Ansprüche 6 bis 8, wobei ein bewegbares Element (221) den Ständer (20, 220, 320) umfasst, wobei der Ständer (20, 220, 320) einen internen Fluidkanal aufweist und zum Anbringen der Düseneinrichtung (22, 222, 322) daran geeignet ist, und
die Basiseinheit (30, 230, 330) einen Verbindungsmechanismus umfasst, wobei das bewegbare Element (221) drehbar am Verbindungsmechanismus an einem Verbindungspunkt (231) angebracht ist, der von einem Ende des bewegbaren Elements (221) beabstandet ist.

10. Brennerausleger nach Anspruch 9, wobei das bewegbare Element (221) ein Düsenende zwischen dem Verbindungspunkt (231) und dem Ende, das zum Anbringen einer Düseneinrichtung (22, 222, 322) geeignet ist, und ein Ausgleichsgewichtsende zwischen dem Verbindungspunkt (231) und dem entgegengesetzten Ende des bewegbaren Elements (221) aufweist; und
wobei das Ausgleichsgewichtsende zwischen 50 - 300 kg, und optional 100 - 200kg wiegt.

11. Brennerausleger nach einem der Ansprüche 9 oder 10, wobei das bewegbare Element (221) ein Düsenende zwischen dem Verbindungspunkt (231) und dem Ende, das zum Anbringen einer Düseneinrichtung (22, 222, 322) geeignet ist, und ein Ausgleichsgewichtsende zwischen dem Verbindungspunkt (231) und dem entgegengesetzen Ende des bewegbaren Elements (221) aufweist; und
wobei sich 20 - 40% des kombinierten Gewichts des bewegbaren Elements (221) und der Düseneinrichtung (22, 222, 322) am Ausgleichsgewichtsende des bewegbaren Elements (221) befinden.

12. Brennerausleger nach einem der Ansprüche 6 bis 11, wobei der Laufsteg (16,219) des Brennerauslegers (12, 212, 312) mit Auslegerhandläufe (18, 216) versehen ist und das Sprühflutsystem (10, 110, 210, 310) am Brennerausleger (12, 212, 312) außen von den Auslegerhandläufen (18,216) angebracht ist.

13. Brennerausleger nach einem der Ansprüche 6 bis 12, wobei der Laufsteg mit einer lichten Breite von mindestens 50cm entlang seiner Länge versehen ist, und optional der Laufsteg (16,219) mit einer lichten Breite von mindestens 65cm entlang seiner Länge versehen ist.

## Revendications

1. Procédé d'obtention d'un système de type déluge (10, 110,210, 310) pour créer une barrière d'eau sur une flèche de brûleur (12, 212, 312) comprenant une passerelle (16, 219) durant le torchage, la flèche de brûleur étant dotée d'une tuyauterie de pétrole et de gaz (15), le système de type déluge (10, 110,210,310) comprenant une unité de base (30,230,330), une colonne (20, 220, 320) et un appareil à buse (22, 222, 322), ladite colonne (20, 220, 320) étant fixée a l'unité de base et pouvant être déplacée par rapport à celle-ci, à partir d'une position repliée jusqu'à une position d'utilisation ;
le procédé comprenant la fixation du système de type déluge (10, 110, 210, 310) à la flèche de brûleur (12,212,312) adjacente à la passerelle (16,219) avec l'unité de base fixée à un support de main courante de la flèche de brûleur, de sorte qu'une largeur libre supérieure ou égale a 30 cm subsiste sur la largeur de passerelle de la flèche de brûleur après la fixation du système de type déluge (10,110,210,310);
l'utilisation de la flèche de brûleur pour une opération de torchage de puits au niveau de l'extrémité de la flèche en fournissant du pétrole et du gaz par l'intermédiaire de la tuyauterie de pétrole et de gaz, et la génération ainsi d'une source de chaleur au niveau de l'extrémité de la flèche,
la création de la barrière d'eau avec un écran d'eau à l'aide du système de type déluge, afin d'atténuer le transfert de chaleur provenant de la source de chaleur.

2. Procédé selon la revendication 1, une largeur libre supérieure ou égale à 50 cm subsistant sur la largeur de passerelle de la flèche de brûleur après la fixation du système de type déluge (10, 110, 210, 310).

3. Procédé selon la revendication 2, une largeur libre supérieure ou égale à 65 cm subsistant sur la largeur de passerelle de la flèche de brûleur après la fixation du système de type déluge (10, 110, 210, 310).

4. Procédé selon l'une quelconque des revendications 1 à 3, ledit système de type déluge (10, 110, 210, 310) étant placé sur la tuyauterie de pétrole et de gaz (15) sur la passerelle de flèche de brûleur. (12,212, 312).

5. Procédé selon l'une quelconque des revendications 1 à 3, ledit système de type déluge (10, 110, 210, 310) étant fixé à la flèche de brûleur (12, 212, 312) a l'extérieur de supports de main courante (19) de la passerelle (16, 219) de flèche de brûleur.

6. Flèche de brûleur destiné au torchage, la flèche de brûleur étant dotée de tuyauterie de pétrole et de gaz (15) et comprenant une passerelle et un système de type déluge (10, 110, 210, 310) pour créer une barrière d'eau, ledit système de type déluge (10, 110, 210, 310) comprenant une unité de base (30, 230, 330), une colonne (20, 220, 320) fixée a l'unité de base (30, 230, 330) et pouvant être déplacée par rapport à celle-ci entre une position repliée et une position d'utilisation et un appareil à buse (22, 222, 322) fixé à la colonne (20, 220, 320), ledit système de type déluge (10, 110,210, 310) étant relié à la flèche de brûleur (12,212,312) adjacente à la passerelle (16, 219) avec l'unité de base fixée à un support de main courante de la flèche de brûleur, de sorte que la passerelle (16, 219) soit pourvue d'une largeur de jeu supérieure ou égale a 30 cm; de sorte que la flèche de brûleur soit conçue pour une opération de torchage de puits au niveau d'une extrémité de la flèche, ce qui génère une source de chaleur au niveau de l'extrémité de la flèche ; et que le système de type déluge soit conçu pour créer la barrière d'eau avec un écran d'eau pour atténuer le transfert de chaleur en provenance de la source de chaleur.

7. Flèche de brûleur selon la revendication 6, ladite colonne (20, 220, 320) étant conçue pour s'étendre parallèlement a la passerelle (16, 219) lorsque la colonne (20,220, 320) est dans la position repliée.

8. Flèche de brûleur selon l'une quelconque des revendications 6 ou 7, ladite colonne (220, 320) étant conçue pour se déplacer entre une orientation dans laquelle l'appareil à buse (222, 322) est tourné vers le haut et une autre position dans laquelle l'appareil à buse (222, 322) est tourné vers le bas.

9. Flèche de brûleur selon l'une quelconque des revendications 6 à 8, un élément mobile (221) comprenant la colonne (20, 220, 320), la colonne (20, 220, 320) possédant un canal de fluide interne et étant adaptée pour fixer l'appareil à buse (22, 222, 322) à celle-ci ;
et l'unité de base (30, 230, 330) comprenant un mécanisme de raccordement, ledit élément mobile (221) étant fixé rotatif au mécanisme de raccordement au niveau d'un point de raccordement (231) espacé d'une extrémité de l'élément mobile (221).

10. Flèche de brûleur selon la revendication 9, ledit élément mobile (221) possédant une extrémité de buse entre ledit point de raccordement (231) et l'extrémité adaptée a la fixation d'un appareil à buse (22, 222, 322) et une extrémité de contrepoids entre ledit point de raccordement (231) et l'extrémité opposée de l'élément mobile (221) ;
et ladite extrémité de contrepoids pesant entre 50 et 300 kg et, éventuellement, entre 100 et 200 kg.

11. Flèche de brûleur selon l'une quelconque des revendications 9 ou 10, ledit élément mobile (221) possédant une extrémité de buse entre ledit point de raccordement (231) et l'extrémité adaptée a la fixation d'un appareil à buse (22, 222, 322) et une extrémité de contrepoids entre ledit point de raccordement (231) et l'extrémité opposée de l'élément mobile (221) ;
et 20 a 40 % du poids combiné de l'élément mobile (221) et de l'appareil à buse (22, 222, 322) étant au niveau de l'extrémité de contrepoids de l'élément mobile (221).

12. Flèche de brûleur selon l'une quelconque des revendications 6 à 11, ladite passerelle (16,219) de la flèche de brûleur (12,212, 312) étant dotée de mains courantes de flèche (18,216) et ledit système de type déluge (10, 110,210, 310) étant fixé à la flèche de brûleur (12,212, 312) a l'extérieur des mains courantes de flèche (18, 216).

13. Flèche de brûleur selon l'une quelconque des revendications 6 à 12, ladite passerelle étant dotée d'une largeur de jeu supérieure ou égale a 50 cm le long de sa longueur, et éventuellement ladite passerelle (16, 219) étant dotée d'une largeur de jeu supérieur ou égale a 65 cm le long de sa longueur.
